(19) Europäisches Patentamt
European Patent Office
Office européen des brevets

(11) **EP 2 316 865 A1**

(12) **EUROPÄISCHE PATENTANMELDUNG**

(43) Veröffentlichungstag:
**04.05.2011 Patentblatt 2011/18**

(51) Int Cl.:
*C08G 18/08* *(2006.01)*     *C08G 18/10* *(2006.01)*
*C09J 175/04* *(2006.01)*     *C09J 175/08* *(2006.01)*

(21) Anmeldenummer: **09174217.1**

(22) Anmeldetag: **27.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(71) Anmelder: **Sika Technology AG**
**6340 Baar (CH)**

(72) Erfinder:
• **Demmig, Martin**
**25451, Quickborn (DE)**
• **Buchholz, André**
**27721, Ritterhude (DE)**

• **Bosse, Christina**
**22765, Hamburg (DE)**
• **Bendkowski, Tino**
**25495, Kummerfeld (DE)**

(74) Vertreter: **Isler, Jörg**
**Sika Patent Attorneys**
**Sika Technology AG**
**Tüffenwies 16**
**Postfach**
**8048 Zürich (CH)**

(54) **Wässriger zweikomponentiger Dispersionsklebstoff**

(57) Die vorliegende Erfindung betrifft wässrige zweikomponentige wässrige Dispersionsklebstoffe, welche insbesondere Polyether-Polyurethanpolymere sowie Ethylenvinylacetat-Copolymer (EVA) mit einer Glasübergangstemperatur von mehr als 0°C aufweisen.

Diese Dispersionsklebstoffe eignen sich bestens als Kontaktklebstoffe und für das Verkleben von Kunststofffolien. Es zeigte sich, dass sich die Klebstoffe, bzw. die damit gefertigten Klebverbundkörper durch eine ausserordentlich geringes Weichmacheraufnahmeverhalten sowie eine Kontaktverklebbarkeit auszeichnen. Weiterhin vorteilhaft sind die gute Wärmebeständigkeit und gute Haftung auf diversen Untergründen.

Fig. 4

EP 2 316 865 A1

**Beschreibung**

**Technisches Gebiet**

Die Erfindung betrifft das Gebiet der Dispersionsklebstoffe.

**Stand der Technik**

Dispersionsklebstoffe sind schon seit längerem bekannt und werden insbesondere in der Verpackungsindustrie verwendet.

Wässrige Dispersionsklebstoffe weisen gegenüber den auf Lösungsmitteln basierenden Dispersionsklebstoffe starke Vorteile in ökologischer, sicherheitstechnischer und arbeitshygienischer Hinsicht auf, weshalb der Markt eine besonders grosse Nachfrage nach wässrigen Dispersionsklebstoffen zeigt. Nachteilig bei den wässrigen Dispersionsklebstoffen ist jedoch eine vielfach ungenügende Lagerstabilität.

Gewisse Dispersionsklebstoffe, insbesondere Lösungsmittel-haltige Dispersionsklebstoffe sind als Kontaktklebstoffe einsetzbar. Bei einem Kontaktklebstoff wird der Klebstoff auf die Oberflächen der zu verklebenden Substrate aufgetragen, abgelüftet und anschliessend miteinander gefügt (kontaktier). Derartige Klebstoffe weisen nach dem Fügen eine sofortige Klebfestigkeit auf, was für viele Anwendungen von grösstem Vorteil ist. Zur Erzielung dieser Kontaktverklebbarkeit weisen derartige Kontaktklebstoffe insbesondere Weichmacher und/oder Polymere mit sehr tiefen Glasübergangstemperaturen auf.

Beim Verkleben von Kunststofffolien besteht eine grundsätzliche Schwierigkeit, dass die typischen eingesetzten Folien grosse Mengen an Weichmacher aufweisen, und dass dieser Weichmacher die Tendenz zeigt, in den Klebstoff zu migrieren, wodurch einerseits die Folie versprödet und andererseits der Klebstoff durch den aufgenommenen Weichmacher in seinen mechanischen Eigenschaften negativ beeinträchtigt wird, was deshalb bereits nach kurzer Zeit zu einem Klebversagen führt. Dieser Prozess wird durch Wärmeeinfluss zudem beschleunigt. Es hat sich gezeigt, dass die Weichmacheraufnahme vor allem durch Polymere mit sehr tiefen Glasübergangstemperaturen bedingt ist.

**Darstellung der Erfindung**

Die Aufgabe der vorliegenden Erfindung ist es daher, einen wässrigen Dispersionsklebstoff zur Verfügung zu stellen, welcher gleichzeitig die Eigenschaften einer geringen Weichmacheraufnahme und einer Kontaktverklebbarkeit aufweist. Es wurde nun überraschenderweise gefunden, dass ein wässriger zweikomponentiger Dispersionsklebstoff gemäss Anspruch diese Aufgabe lösen kann.

Dieser Dispersionsklebstoff weist zudem die für wässrige Dispersionsklebstoffe typischen ökologischen, sicherheitstechnischen und arbeitshygienischen Vorteile auf. Es lassen sich zudem in bevorzugten Ausführungsformen Dispersionsklebstoffe herstellen, welche frei von VOCs sind. Die wässrigen Dispersionsklebstoffe lassen sich insbesondere sehr lagerstabil formulieren. Es hat sich weiterhin gezeigt, dass sich diese Klebstoffe bestens für das Verkleben von Kunststofffolien, insbesondere durch Kontaktverklebung, eignen. Es hat sich zudem gezeigt, dass die Klebstoffe über ein äusserst gutes Haftspektrum verfügen und unter anderem auch Polyolefin sehr gut verkleben können. Die Haftung ist sogar derart gut, dass in den meisten Fällen auf die Verwendung eines Primers verzichtet werden kann. Das primerlose Verkleben von Kunststofffolien ist somit ein weiterer und äusserst überraschender Vorteil der vorliegenden Dispersionsklebstoffe. Schliesslich wurde gefunden, dass die Verklebungen eine äusserst gute Wärmebeständigkeit aufweisen.

Als besonders geeignetes Einsatzgebiet der Klebstoffe hat sich das Verkleben von Kunststofffolien auf Dächern erwiesen.

Hier kommen die Vorteile der geringen Weichmacheraufnahme, der Kontaktverklebung und der Wärmebeständigkeit besonders gut zum Tragen.

Weitere Aspekte der Erfindung sind Gegenstand weiterer unabhängiger Ansprüche. Besonders bevorzugte Ausführungsformen der Erfindung sind Gegenstand der abhängigen Ansprüche.

**Wege zur Ausführung der Erfindung**

Die vorliegende Erfindung betrifft in einem ersten Aspekt einen zweikomponentigen wässrigen Dispersionsklebstoff, welcher aus zwei Komponenten besteht.

Die erste Komponente **(K1)** enthält hierbei

- mindestens ein Polyether-Polyurethanpolymer **(PEPU)**;
- mindestens ein Ethylenvinylacetat-Copolymer (EVA) mit einer Glasübergangstemperatur von mehr als 0°C; sowie

- Wasser.

Die zweite Komponente **(K2)** enthält hierbei mindestens ein Polyisocyanat.

Die erste Komponente **(K1)** enthält mindestens ein Polyether-Polyurethanpolymer **(PEPU)**. Als Polyether-Polyurethanpolymer wird im vorliegenden Dokument ein Polymer bezeichnet, welches aus der Reaktion mindestens eines Polyetherpolyols und mindestens eines Polyisocyanates resultiert, und zwar derart, dass die Polyether-Polyurethanpolymere Hydroxylgruppen aufweisen.

Als Polyetherpolyole geeignet sind insbesondere Polyoxyalkylenpolyole, auch Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Ebenfalls besonders geeignet sind sogenannte Ethylenoxid-terminierte ("EO-endcapped", ethylene oxideendcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.

Es ist weiterhin bevorzugt, Polyetherpolyole mit ionischen, insbesondere anionischen, Gruppen einzusetzen oder aber zusätzlich zu den Polyetherpolyolen noch Polyole mit ionischen, vor allem anionischen Gruppen, einzusetzen. Als bevorzugte anionische Gruppen gelten Sulfonat- oder Carboxylatgruppen. Insbesondere geeignet als derartige Polyole mit ionischen, vor allem anionischen Gruppen sind Dihydroxyalkylcarbonsäure-Salze, wie beispielsweise Dimethylolpropionsäure-Salze oder dazu strukturähnliche Diolcarbonsäuren-Salze. Anstelle des direkten Einsatzes der Substanzen mit anionischen Gruppen, können auch die entsprechenden protonierten Formen eingesetzt werden und das gebildete Polyether-Polyurethanpolymer anschliessend mit einer Base, insbesondere mittels eines tertiären Amis, neutralisiert, d.h. wieder deprotoniert werden, so dass des Polyether-Polyurethanpolymers **(PEPU)** anionische Gruppen aufweist.

Als Polyisocyanat für die Herstellung des Polyether-Polyurethanpolymers **(PEPU)** werden vorzugsweise aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder $H_6$TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder $H_{12}$MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), $\alpha,\alpha,\alpha',\alpha',\alpha'',\alpha''$-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Bevorzugt als Polyisocyanate sind aliphatische oder cycloaliphatische Polyisocyanate.

Als Oligomere der vorgenannten Isocyanate gelten Dimere und Trimere, wie beispielsweise Isocyanurate oder Biurete.

Das Polyether-Polyurethanpolymer (**PEPU**) weist ein mittleres Molekulargewicht von vorzugsweise 500 g/mol oder darüber auf. Insbesondere weist das mittleres Molekulargewicht einen Wert von 1000 bis 30'000 g/mol, bevorzugt von 2000 bis 10'000 g/mol, auf.

Vorzugsweise weist das Polyether-Polyurethanpolymer (**PEPU**) anionische Gruppen auf.

Die Polyether-Polyurethanpolymere (**PEPU**) können entweder in einem Einschrittverfahren direkt aus dem mindestens einen Polyetherpolyol und dem mindestens einen Polyisocyanat hergestellt werden, wobei das Polyol in einem stöchiometrischen Überschuss vorliegt, so dass das Polyether-Polyurethanpolymer freie Hydroxylgruppen aufweist; oder aber es kann über ein Mehrschrittverfahren gewonnnen werden, beispielsweise durch eine überstöchiometrische Umsetzung eines Polyols mit einem Isocyanatterminierten Polyurethanprepolymer, welches seinerseits in einem ersten Schritt aus dem mindestens einen Polyetherpolyol und dem mindestens einen Polyisocyanat hergestellt wurde.

Bevorzugt wird ein Verfahren, bei welchem in einem ersten Schritt ein Isocyanatgruppen-terminiertes Polyurethanprepolymer aus mindestens einem Polyetherpolyol und mindestens einem Polyisocyanat hergestellt wurde, und in einem zweiten Schritt dieses mit einer überstöchiometrischen Menge eines Carboxylgruppen aufweisenden Polyols, insbesondere Dimethylolpropionsäure, allenfalls in Abmischung eines Diols, und anschliessender Neutralisation, insbesondere durch Zugabe eines tertiären Amins, zu einem anionischen Polyether-Polyurethanpolymer (**PEPU**) umgesetzt wird, und welches somit sowohl Hydroxyl- als auch Carbonatgruppen aufweist.

Das Polyether-Polyurethanpolymer (**PEPU**) ist vorzugsweise basisch.

Der Polyether-Charakter des Poly<u>ether</u>-Polyurethanpolymers (**PEPU**) ist für das Wesen der Erfindung wesentlich. Es wurde nämlich gefunden, dass bei Verwendung von entsprechenden Poly<u>ester</u>-Polyurethanpolymere, d.h. Polyurethanpolymere hergestellt aus Polyesterpolyols und den entsprechenden Polyisocyanate, die erfindungswesentlichen Vorteile nicht auftreten.

Vorzugsweise werden die Polyether-Polyurethanpolymere (**PEPU**) für die Herstellung der ersten Komponente (**K1**) als Dispersion eingesetzt. Derartige Dispersionen sind kommerziell erhältlich und weisen einen typischen Festkörpergehalt von 30 - 50 Gew.-% und einer typischen Viskosität bei Raumtemperatur zwischen 10 und 500 mPa•s (Brookfield) auf.

Die Menge an Polyether-Polyurethanpolymer (**PEPU**) beträgt vorzugsweise 5 bis 45 Gew.-%, insbesondere 5 bis 30 Gew.-%, bezogen auf das Gewicht der ersten Komponente (**K1**).

Die erste Komponente (**K1**) enthält weiterhin mindestens ein Ethylenvinylacetat-Copolymer (EVA) mit einer Glasübergangstemperatur von mehr als 0°C.

Ethylenvinylacetat-Copolymere sind dem Fachmann geläufige Verbindungen und sind kommerziell breit erhältlich. Bevorzugt weist das Ethylenvinylacetat-Copolymer einen molaren Überschuss am Strukturelement, welches vom Ethylen stammt, gegenüber dem Strukturelement, welches vom Vinylacetat stammt, auf. Bevorzugt sind Ethylenvinylacetat-Copolymere mit einem derartigen Ethylen/Vinylacetat-Verhältnis von 52 / 48 bis 65 / 35.

Insbesondere geeignet sind derartige Ethylenvinylacetat-Copolymere, welche vom Hersteller für den Einsatz in Dispersionen empfohlen werden.

Das Ethylenvinylacetat-Copolymer (EVA) weist eine Glasübergangstemperatur von mehr als 0°C auf. Als Glasübergangstemperaturen werden im vorliegenden Dokuments Glasübergangstemperaturen verstanden, welche mittels Differential Scanning Calorimetrie (DSC) gemessen wurden, wobei die Probe zuerst mit einer Abkühlrate von 10°K/min von Raumtemperatur auf - 50°C gekühlt wurde, dort 5 Minuten gehalten wurde, und anschliessend mit einer Aufheizrate von 10 K/min auf 100°C erhitzt und gemessen wurde. Als Glasübergangstemperatur wurde der Wendepunkt der gemessenen DSC-Kurve angegeben. DSC Kurven wurden auf einem Mettler-Toledo DSC 821e (Kryostat Huber TC 100) gemessen.

Für die vorliegende Erfindung ist es wesentlich, dass die Glasübergangstemperaturen des Ethylenvinylacetat-Copolymers über 0°C liegt.

Vorzugsweise wird das Ethylenvinylacetat-Copolymer (EVA) für die Herstellung der ersten Komponente (**K1**) als Dispersion eingesetzt. Derartige Dispersionen sind kommerziell erhältlich und weisen einen typischen Festkörpergehalt von 50 - 70 Gew.-% und einer typischen Viskosität bei Raumtemperatur zwischen 2000 und 8000 mPa•s (Brookfield) auf.

Die Menge an Ethylenvinylacetat-Copolymer mit einer Glasübergangstemperatur von mehr als 0°C beträgt vorzugsweise 20 bis 55 Gew.-%, insbesondere 35 bis 50 Gew.-%, bezogen auf das Gewicht der ersten Komponente (**K1**).

Es ist bevorzugt, dass das Gewichtsverhältnis von Ethylenvinylacetat-Copolymer (EVA) zu Polyether-Polyurethanpolymer (**PEPU**) einen Wert von 10 bis 0.8, insbesondere von 9 bis 1.1, bevorzugt 8 bis 1.5, beträgt.

Die erste Komponente (**K1**) enthält weiterhin Wasser.

Der Anteil an Wasser beträgt vorzugsweise 30 - 70 Gew.-%, insbesondere 30 - 60 Gew.-%, bevorzugt 35 - 50 Gew.-%, bezogen auf das Gesamtgewicht des zweikomponentigen wässrigen Dispersionsklebstoffs.

Die erste Komponente (**K1**) kann bei Bedarf weitere Bestandteile enthalten. Insbesondere sind derartige weitere Bestandteile, welche ausgewählt sind aus der Gruppe bestehend aus Stabilisatoren, Verdickungsmittel, Alterungsschutzmittel, Fungizide, Pigmente, Farbstoffe, Netzmittel, Antischaummittel, Dispiergierhilfsmittel, Filmbildehilfsmittel, Mattierungsmittel und Füllstoffe.

Vorteilhaft enthält die erste Komponente Stabilisatoren. Grundsätzlich sind dies solche Stabilisatoren, wie sie bei wässrigen Dispersionen üblicherweise verwendet werden. Es hat sich jedoch gezeigt, dass die Verwendung von Stabilisatoren zu sehr lagerstabilen Dispersionsklebstoffen führt, wenn der Stabilisator ausgewählt ist aus der Gruppe bestehend aus Netzmittel, Cellulose, Polyvinylalkohol und Polyvinylpyrrolidon sowie Mischungen davon ist.

Die erste Komponente (**K1**) weist typischerweise einen pH von grösser als 6 auf. Vorzugsweise beträgt der pH zwischen 7 und 9.

Die erste Komponente (**K1**) ist eine Dispersion und ist vorzugsweise bei Temperaturen über 0°C lagerstabil, d.h. sie separiert bei Raumtemperatur auch nach längeren Lagerzeiten, typischerweise von bis zu 8 Monaten, nicht.

Die erste Komponente (**K1**) wird vorzugsweise durch intensives Mischen einer wässrigen Dispersion von Polyether-Polyurethanpolymer (**PEPU**) und einer wässrigen Dispersion von Ethylenvinylacetat-Copolymer mit einer Glasübergangstemperatur von mehr als 0°C und allenfalls Wasser und allenfalls weiterer Bestandteile erhalten.

Die zweite Komponente (**K2**) enthält mindestens ein Polyisocyanat.

Als Polyisocyanate eignen sich insbesondere die bereits zur Herstellung des Polyether-Polyurethanpolymer (**PEPU**) vorgängig bereits beschriebenen Polyisocyanate.

Das Polyisocyanat ist vorzugsweise ein Trimer eines Diisocyanates, insbesondere eines aliphatischen oder cycloaliphatischen Diisocyanates. Derartige Trimere sind bevorzugt hydrophilisiert, insbesondere durch Polyoxyalkylenreste.

Bevorzugt ist das in der zweiten Komponenten (**K2**) befindliche Polyisocyanat ein Trimer von 1,6-Hexamethylendiisocyanat (HDI) oder 1-Isocyanato-3,3,5-trimethyl-5-isocyanatomethyl-cyclohexan (=Isophorondiisocyanat oder IPDI), bevorzugt von 1-Isocyanato-3,3,5-trimethyl-5-isocyanatomethyl-cyclohexan (=Isophorondiisocyanat oder IPDI).

Besonders bevorzugt weist die zweite Komponente (**K2**) eine Mischung eines Trimeren von 1,6-Hexamethylendiisocyanat (HDI) und eines Trimeren von 1-Isocyanato-3,3,5-trimethyl-5-isocyanatomethyl-cyclohexan (=Isophorondiisocyanat oder IPDI) auf.

Die Menge des Polyisocyanat in der zweiten Komponente (**K2**) ist vorzugsweise dergestalt, dass sie in einem Verhältnis der Isocyanatgruppen der ersten Komponente (**K1**) zu den Hydroxylgruppen des Polyether-Polyurethanpolymer (**PEPU**) der ersten Komponente (**K1**) des Dispersionsklebstoffs von 0.8 bis 1.2, bevorzugt von etwa 1, ergeben.

Die zweite Komponente (**K2**) kann bei Bedarf weitere Bestandteile enthalten. Insbesondere sind derartige weitere Bestandteile, welche ausgewählt sind aus der Gruppe bestehend aus Stabilisatoren, Verdickungsmittel, Alterungsschutzmittel, Fungizide, Pigmente, Farbstoffe, Netzmittel, Antischaummittel, Mattierungsmittel, hoch siedende Verdünnungsmittel und Füllstoffe. Die hoch siedende Verdünnungsmittel, zuweilen auch Extender genannt, sind niedrig viskose Verdünnungsmittel, welche vorzugsweise nicht als VOC (Volatile Organic Compounds) gelten. Deren Einsatz erleichtert das Vermischen der zwei Komponenten.

Die zweite Komponente (**K2**) ist verschlossen und geschützt von Feuchtigkeit bei Raumtemperatur über längere Zeit, typischerweise von bis zu 8 Monaten, lagerstabil.

Die vorgängig beschriebenen zwei Komponenten des wässrigen Dispersionsklebstoffs sind in getrennten Behältnissen aufbewahrt bei Raumtemperatur lagerstabil. Bei der Anwendung werden diese zwei Komponenten miteinander gemischt und innerhalb der Topfzeit appliziert. Die Topfzeit beträgt hierbei vorzugsweise mindestens 8 Stunden, insbesondere zwischen 8 und 12 Stunden. Das Vermischen kann typischerweise über einen Statikmischer oder einen maschinenbetriebenen Mischrührer erfolgen. Das Mischverhältnis der zwei Komponenten (**K1:K2**) ist vorzugsweise dergestalt gewählt, dass die Anzahl der Isocyanatgruppen der zweiten Komponente (**K2**) zu der Anzahl der Hydroxylgruppen des Polyether-Polyurethanpolymer (**PEPU**) der ersten Komponente (**K1**) in einem Verhältnis von 0.8 bis 1.2, bevorzugt von etwa 1, zueinander stehen.

In einer Ausführungsform wird die zweite Komponente (K2) unter Rühren zur ersten Komponente (K1), welche in einem Gefäss, beispielsweise einem Eimer, vorliegt, zugegeben und mit einem maschinenbetriebenen Mischrührer vermischt.

Typischerweise beträgt im wässrigen Dispersionsklebstoff das Gewichtsverhältnis der ersten Komponente (**K1**) zur zweiten Komponente (**K2**) einen Wert von 30 bis 5, vorzugsweise 25 bis 10.

Es hat sich als besonders vorteilhaft erwiesen, wenn der dass der Dispersionsklebstoff im Wesentlichen frei von flüchtigen Anteilen (VOC) ist. Der Term "im Wesentlichen frei" bedeutet in diesem Dokument, dass der Anteil des jeweiligen Stoffs kleiner als 5 Gew.-%, insbesondere kleiner als 1 Gew.-%, ist. Vorzugsweise ist der Dispersionsklebstoff frei von flüchtigen Anteilen (VOC). Im vorliegenden Dokument gelten als "flüchtige organische Verbindungen" oder "VOC" organische Verbindungen, welche einen Siedepunkt von höchstens 250°C bei Normdruck (1013 mbar) oder einen Dampfdruck von mindestens 0.1 mbar bei 20°C aufweisen.

Besonders vorteilhaft sind wässrige zweikomponentige Dispersionsklebstoffe, welche frei von organischen Lösungsmitteln, insbesondere frei VOCs und/oder Weichmachern sind. Sowohl VOCs als auch organische Lösungsmittel sind vom ökotoxikologischen und arbeitshygienischen Standpunkt aus nachteilig. Weiterhin können Weichmacher an die Oberfläche eines Klebstoffs migrieren und zum Versagen einer Verklebung führen oder dazuführen, dass die Oberfläche klebrig wird, was zu Verschmutzungen der Klebfugen führt. Auch Lösungsmittel sind unerwünscht, da sie einerseits zusätzliches Gefahrenpotential beim Aufheizen und Applikation des Klebstoffs mit sich bringen können und weil sie andererseits ebenfalls migrieren und über lange Zeit an die Umwelt und an Materialien, welche in Kontakt mit dem Klebstoff stehen, abgegeben werden können und diese negativ beeinflussen können, beziehungsweise zum Versagen der Verklebung führen können.

Es hat sich weiterhin als besonders vorteilhaft erwiesen, wenn der zweikomponentige wässrige Dispersionsklebstoff im Wesentlichen frei von Bestandteilen mit aromatischen Strukturen ist.

Der vorgängig beschriebene zweikomponentige wässrige Dispersionsklebstoff eignet sich insbesondere zum Verkleben von Kunststofffolien, insbesondere im Dachbau, was einen weiteren Aspekt der Erfindung darstellt.

Der zweikomponentige wässrige Dispersionsklebstoff lässt sich zum Verkleben von diversen Substraten verwenden. Der Klebstoff ist in der üblichen Verwendung als Dispersionsklebstoff verwendbar. Es können somit zum Beispiel Verklebungen erreicht werden, bei denen der Klebstoff auf ein Substrat aufgetragen wird, und anschliessend mit einem zweiten Substrat gefügt werden. Der Klebstoff lässt sich jedoch auch - und dies ist besonders vorteilhaft - als Kontaktklebstoff einsetzen.

In einem weiteren Aspekt betrifft die Erfindung ein Verfahren zum Verkleben von Kunststofffolien umfassend die Schritte

(i) Mischen der zwei Komponenten (**K1** und **K2**) des vorgängig beschrieben zweikomponentigen wässrigen Dispersionsklebstoffs,

(ii) Auftragen des nach Schritt (i) gemischten wässrigen Dispersionsklebstoffes auf die Oberfläche einer Kunststofffolie (**S1**) und die Oberfläche eines weiteren Substrates (**S2**);

(iii) Ablüften des nach Schritt (ii) aufgetragenen wässrigen Dispersionsklebstoffes,

(iv) Fügen von Kunststofffolie (**S1**) und des weiteren Substrates (**S2**) durch Kontaktieren des auf der Kunststofffolie (**S1**) und auf dem weiteren Substrates (**S2**) befindlichen und nach Schritt (iii) abgelüfteten Dispersionsklebstoffes.

Der zweikomponentige wässrige Dispersionsklebstoff ist somit insbesondere ein Kontaktklebstoff.

Geeignete erste Substrate (**S1**), d.h. Kunststofffolien, sind insbesondere Polyvinylchlorid (PVC), insbesondere Weich-PVC, oder Polyolefine, insbesondere Polyethylen oder Polypropylen.

Als "Folie", bzw. "Kunststofffolie", werden in diesem Dokument insbesondere biegsame flächige Kunststoffe in einer Dicke von 0.05 Millimeter bis 5 Millimeter verstanden, die sich aufrollen lassen. Somit werden neben Folien im strengen Sinn von Dicken unter 1 mm, auch, und zwar vorzugsweise, Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Folien auch noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden in diesem Dokument auch derartige Folien als Polyolefin-Folien, PVC-Folien bzw. Weich-PVC-Folien bezeichnet, welche nicht zu 100% aus Polyolefinen, PVC bzw. Weich-PVC bestehen.

Meist bevorzugt ist die eine Polyolefinfolie oder eine PVC-Folie.

Als weiteres Substrat (**S2**) geeignete Materialien sind anorganische Substrate wie Glas, Glaskeramik, Beton, Mörtel, Backstein, Ziegel, Gips Faserzemente und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze, Polyisocyanuratharze (PIR); beschichtete Substrate wie beschichtete Metalle oder Legierungen; sowie Farben und Lacke. Insbesondere bevorzugt als weiteres Substrat (**S2**) sind Materialien, wie sie als Dachuntergrund zum Einsatz kommen, d.h. bevorzugt ist das weitere Substrat (**S2**) ausgewählt aus der Gruppe bestehend aus Isolationsschaum auf Basis von Polyisocyanuraten (PIR), Holz, verzinktes Blech, Beton, Faserzementplatten und Gipskartonplatten.

Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Bevorzugt erfolgt jedoch das Verkleben primerlos.

In einem weiteren Aspekt betrifft die Erfindung einen Verbundkörper 1 aufweisend eine Kunststofffolie (**S1**), 2 und ein weiteres Substrat (**S2**), 3, welche über einen Klebstoff 4, welcher aus einem vorgängig im Detail beschriebenen zweikomponentigen wässrigen Dispersionsklebstoff durch Mischen und anschliessende Aushärtung erhalten wurde, miteinender verbunden sind.

Als ein bevorzugter Verbundkörper gilt ein Dach eines Gebäudes.

Es hat sich gezeigt, dass dieser hier beschriebene Dispersionsklebstoff bestens dazu geeignet ist, Folien im Kontaktverfahren zu verkleben, wodurch eine Sofortfestigkeit erreicht wird. Weiterhin zeigte sich, dass überraschenderweise die Haftung auf diversen Untergründen auch nach mehreren Wochen Lagerung bei erhöhter Temperatur, zum Beispiel bei 50°C, erhalten bleibt. Schliesslich zeichnen sich diese Klebstoffe, bzw. die damit hergestellten Verbundkörper, durch eine exzellente Wärmebeständigkeit und geringe Weichmacheraufnahme aus. Es ist besonders überraschend, dass mit der vorliegenden Erfindung die eigentlich entgegenlaufenden Eigenschaften einer guten Kontaktverklebbarkeit und geringe Weichmacheraufnahme miteinander gepaart erreicht werden können.

Als Mass für die Kontaktverklebbarkeit kann der Schälwiderstand unmittelbar nach dem Fügen herangezogen werden. Es hat sich gezeigt, dass der Schälwiderstand $SW_0$, gemessen wie im Detail für die Beispiele dieses Dokuments beschrieben, einen Wert von mindestens 55 N/5cm aufweisen sollte, um eine akzeptable Kontaktverklebbarkeit aufzuweisen.

Es hat sich gezeigt, dass das Weichmacheraufnahmevermögen sehr gut durch einen einfachen Lagerversuch, wie er im Detail für die Beispiele dieses Dokuments beschrieben ist, verwendet werden kann. Es hat sich gezeigt, dass eine derartig bestimmte Weichmacheraufnahme nicht mehr als 60% betragen sollte, damit die Verklebung langfristig gewährleistet werden kann.

**Kurze Beschreibung der Zeichnung**

Im Folgenden werden anhand der Zeichnungen Ausführungsbeispiele der Erfindung näher erläutert. Gleiche Elemente sind in den verschiedenen

Figuren mit den gleichen Bezugszeichen versehen.

Es zeigen:

Fig. 1    eine schematische Darstellung des Mischens der zwei Komponente des zweikomponentigen wässrigen Dispersionsklebstoffs,

Fig. 2    einen Querschnitt durch eine Kunststofffolie und Substrat mit aufgebrachtem gemischten Klebstoff;

Fig. 3    einen Querschnitt eine Kunststofffolie und Substrat mit aufgebrachtem gemischten Klebstoff nach dem Fügen;

Fig. 4    einen Querschnitt durch einen Verbundkörper

Die Zeichnungen sind schematisch. Es sind nur die für das unmittelbare Verständnis der Erfindung wesentlichen Elemente gezeigt.

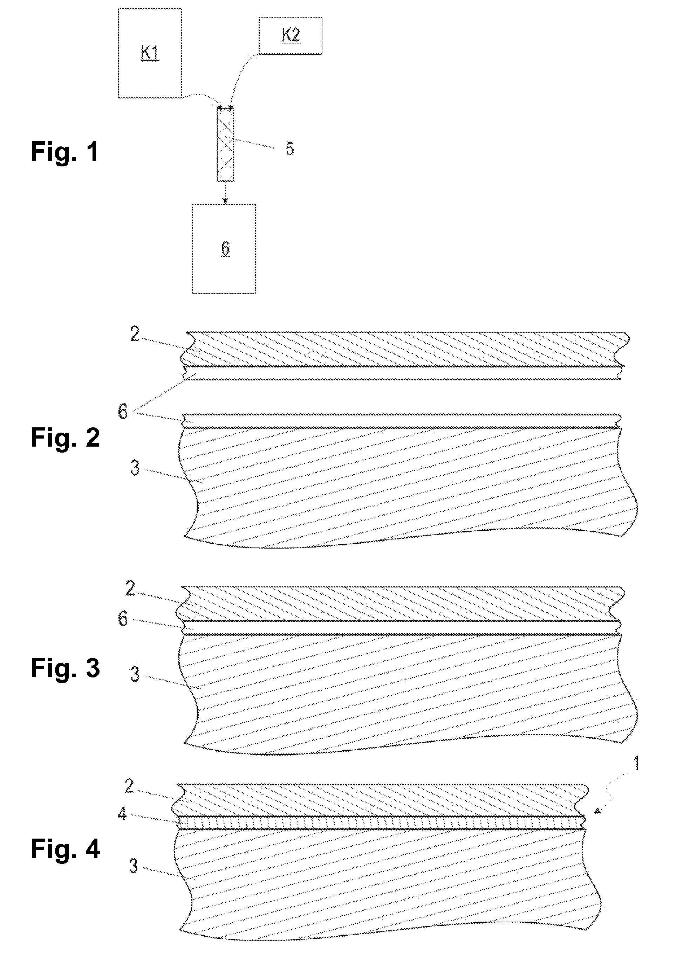

*Figur* 1 zeigt schematisch, dass die erste Komponenten **K1** und die zweiten Komponente **K2** eines wässrigen zweikomponentigen Dispersionsklebstoffs, wie er vorgängig im Detail beschrieben wurde, in der hier gezeigten Ausführungsform mittels eines Mischers 5 gemischt werden und dadurch ein gemischter Dispersionsklebstoff 6 erhalten wird.

Der so gemischte Dispersionsklebstoff 6 wird, wie in *Figur 2* schematisch im Querschnitt dargestellt, auf eine Kunststofffolie (**S1**) 2, insbesondere eine PVC-Folie, und auf die Oberfläche eines weiteren Substrates (**S2**) 3, insbesondere auf ein Betondach, schichtartig innerhalb der Topfzeit des Dispersionsklebstoffs appliziert.

Nach dem Ablüften des Klebstoffs werden die mit Klebstoff 6 beschichtete Kunststofffolie (**S1**) 2, und das mit Klebstoff 6 beschichtete weitere Substrat (**S2**) innerhalb der Topfzeit miteinander gefügt, wie es im schematischen Querschnitt der *Figur 3* dargestellt ist.

Nach dem Fügen erfolgt durch die ablaufende chemische Reaktion die Aushärtung des Klebstoffs. Somit wird, wie in schematischen Querschnitt der *Figur 4* dargestellt, ein Verbundkörper 1 erhalten, welcher eine Kunststofffolie (S1) 2 und ein weiteres Substrat (**S2**) 3 aufweist, welche über einen Klebstoff 4, welcher aus einem vorgängig im Detail beschriebenen zweikomponentigen wässrigen Dispersionsklebstoff durch Mischen und anschliessende Aushärtung erhalten wurde, miteinender verbunden sind.

Der hier gezeigte Verbundkörper stellt in einer bevorzugten Ausführungsform ein Dach eines Gebäudes mit aufgeklebter PVC-Folie dar.

**Bezugszeichenliste**

1    Verbundkörper
2    Kunststofffolie **S1**
3    weiteres Substrat (**S2**)
4    Klebstoff

5    Mischer
6    unausgehärteter Klebstoff nach Mischen der zwei Komponenten K1 und K2
K1   erste Komponente des Klebstoffs
K2   zweite Komponente des Klebstoffs

**Beispiele**

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Herstellung von wässrigen zweikomponentigen Dispersionsklebstoffen

Es wurden als erste Komponenten die in Tabelle 1 Bestandteile verwendet. Bei mehreren Bestandteilen wurden die einzelnen in Gewichtsanteilen angegebenen Bestandteile mit einem Laborrührgerät mit Dissolverscheibe intensiv miteinander in einem offenen Gefäss gemischt. Bei den Vergleichsbeispielen wurde darauf geachtet, dass dieselbe Menge an Polymer eingesetzt wurde.

Tabelle 1 Zweikomponentige Dispersionen.

|  | Ref.1 | Ref.2 | Ref.3 | Ref.4 | 1 | 2 | 3 | 4 |
|---|---|---|---|---|---|---|---|---|
| **Erste Komponente** |  |  |  |  |  |  |  |  |
| PEPU-1[1] | 30 |  | 130 |  | 30 | 30 | 50 | 70 |
| PU-Ref[2] |  | 26.6 |  |  |  |  |  |  |
| EVA-1[3] |  | 100 |  | 130 | 100 | 100 | 80 | 60 |
| EVA-Ref[4] | 92.3 |  |  |  |  |  |  |  |
| Total: | 92.3 | 126.6 | 130 | 130 | 130 | 130 | 130 | 130 |
|  |  |  |  |  |  |  |  |  |
| **Zweite Komponente** |  |  |  |  |  |  |  |  |
| HDI-Trimer | 6.5 | 6.5 | 6.5 | 6.5 | 6.5 | 3.25 | 6.5 | 6.5 |
| IPDI- Trimer[6] |  |  |  |  |  | 3.25 |  |  |

[1] PEPU-1: wässrige Dispersion eines aliphatischen Polyether-Polyurethans mit anionischen Gruppen, Festkörpergehalt: 40 Gew.-%, pH = 7.5, Viskosität (Brookfield, 20°C) = 20 - 200 mPa•s ;
[2] PU-Ref:: wässrige Dispersion eines Polyester-Polyurethans, Festkörpergehalt: 45 Gew.-%, pH = 8.5, Viskosität (Brookfield, 23°C) = 10 - 70 mPa•s;
[3] EVA-1: wässrige Dispersion eines Ethylenvinylacetat-Copolymers, Festkörpergehalt: 60 Gew.-%, Viskosität (Brookfield, 23°C) = 2800-4800 mPa•s, Tg = 3°C[7]
[4] EVA-Ref.: Ethylenvinylacetat-Copolymerss, Festkörpergehalt: 65 Gew.-%, Viskosität (Brookfield, 23°C) = 1000 - 3000 mPa•s, Tg = -8°C[7]
[5] HDI-Trimer.: Hydrophilisiertes Trimer von HDI, NCO-Gehalt = 21.8%, Viskosität (23°C): 1250 mPa•s
[6] IPDI-Trimer.: Hydrophilisertes IPDI-Isocyanurat, NCO-Gehalt = 11%.
[7] Tg: Glasübergangstemperatur gemessen über DSC (Maximum, RT->-50°C, Abkühlrate: 10°K/min, 5 Min. bei -50°C gehalten, Aufheizen und Aufnehmen der DSC-Kurve -50°C -> 100°C, Aufheizrate: 10°K/min) auf einem Mettler Toledo DSC 821 e mit Kryostat Huber TC 100

Zu den 130, bzw. 126.6, bzw. 92.3, Teilen der ersten Komponente wurden 6.5 Teile der zweiten Komponente bestehend aus den in Tabelle 1 angegebenen Polyisocyanat(en) unter Rühren zugegeben. Nach intensivem Mischen wurden die so hergestellten Dispersionsklebstoffe direkt für die Prüfungen verwendet.

Prüfergebnisse

Als Mass für die <u>Kontaktverklebbarkeit</u> wurde der Schälwiderstand ($SW_0$) gemessen und zwar wie folgt:

Der jeweilige Klebstoff wurde nach dem Mischen je auf die Oberfläche einer gängigen Weichmacherhaltige PVC-Folie der Breite 5 cm und eine Holzplatte mittels eines Pinsel beschichtet. Nach der Trocknung wurde der Verbund mittels 5kg-Andruckrolle gefügt. Sofort nach dem Fügen wurde der Schälwiderstand des Verbundes mit einer Zugprüfmaschine geprüft (Winkel 90°, Vorschubgeschwindigkeit 100 mm/min) und in Tabelle 2 als $SW_0$ angegeben.

Weiterhin wurde der Schälwiderstand der entsprechenden Probekörper erst nach 3 Tagen Lagerung bei 25°C/ 50% rel. Luftfeuchtigkeit gemessen und in Tabelle 2 als $SW_{3d}$ *(Holz)* angegeben.
Weiterhin wurden Probekörpern mit der Substratkombination verzinktes Stahlblech und PVC entsprechend hergestellt und der Schälwiderstand nach 3 Tagen entsprechend geprüft und in Tabelle 2 als $SW_{3d}$ *(Metall)* angegeben. Der Schälwiderstand nach 3 Tagen stellt ein Mass für die End-Haftfestigkeit des Klebstoffs dar.
Das Weichmacheraufnahmeverhalten wurde über die folgende Messung ermittelt:

Aus den gemischten Dispersionsklebstoffen wurden Filme gegossen mit einer Nassschichtstärke von 0.5 mm. Nach komplettem Trocknen der Filme wurden diese gewogen (Masse = $m_0$) und in Di-isononylphthalat gelegt. Nach 20 Stunden Lagerung bei 50°C wurden die Filme entnommen, gut abgewischt und erneut gewogen (Masse = $m_x$). Aus der relativen Massenzunahme wurde wie folgt die Weichmacheraufnahme ermittelt:

$$Weichmacheraufnahme = \frac{m_x - m_0}{m_0}$$

Die so ermittelten Werte wurden In Tabelle 2 als %-Werte in Tabelle 2 angegeben.

Tabelle 2: Prüfergebnisse.

|  | *Ref.1* | *Ref.2* | *Ref.3* | *Ref.4* | **1** | **2** | **3** | **4** |
|---|---|---|---|---|---|---|---|---|
| *Kontaktverklebbarkeit $SW_0$* [N/5cm] | 41 | 47 | 67 | 71 | 80 | 85 | 85 | 70 |
| *$SW_{3d}$ (Holz)* [N/5cm] | 130 | 90 | 105 | 106 | 135 | 145 | 125 | 110 |
| *$SW_{3d}$ (Metall)* [N/5cm] | 105 | 81 | 78 | 65 | 105 | 129 | 104 | 101 |
| *Weichmacheraufnahme* [%] | 160 | 20 | 248 | 35 | 27 | 27 | 39 | 57 |

Die Ergebnisse aus Tabelle 2 zeigen, dass die Referenzen entweder ungenügende Kontaktverklebbarkeit oder eine hohe Weichmacheraufnahme zeigen, während die Beispiele *1* bis *4* eine optimale Kombination dieser Eigenschaften aufweisen. Weiterhin ist aus dem Vergleich der Beispiele *1* und *2* ersichtlich, dass eine IPDI-Trimer/HDI-Trimer-Kombination vorteilhaft ist.

**Patentansprüche**

1. Zweikomponentiger wässriger Dispersionsklebstoff bestehend aus zwei Komponenten,
   **dadurch gekennzeichnet, dass**
   die erste Komponente (**K1**)

   - mindestens ein Polyether-Polyurethanpolymer (**PEPU**);
   - mindestens ein Ethylenvinylacetat-Copolymer (EVA) mit einer Glasübergangstemperatur von mehr als 0°C; sowie
   - Wasser

   enthält;
   und die zweite Komponente (**K2**) mindestens ein Polyisocyanat enthält.

2. Zweikomponentiger wässriger Dispersionsklebstoff gemäss Anspruch 1, **dadurch gekennzeichnet, dass** das Polyether-Polyurethanpolymer (**PEPU**) anionische Gruppen aufweist.

3. Zweikomponentiger wässriger Dispersionsklebstoff gemäss Anspruch 1 oder 2, **dadurch gekennzeichnet, dass** das Polyisocyanat ein Trimer eines Diisocyanates, insbesondere eines aliphatischen oder cycloaliphatischen Diisocyanates, ist.

4. Zweikomponentiger wässriger Dispersionsklebstoff gemäss einem der vorhergehenden Ansprüche, **dadurch gekennzeichnet, dass** das Polyisocyanat ein Trimer von 1,6-Hexamethylendiisocyanat (HDI) oder 1-Isocyanato-3,3,5-trimethyl-5-isocyanatomethyl-cyclohexan (=Isophorondiisocyanat oder IPDI), bevorzugt von 1-Isocyanato-3,3,5-trimethyl-5-isocyanatomethyl-cyclohexan (=Isophorondiisocyanat oder IPDI), ist.

5. Zweikomponentiger wässriger Dispersionsklebstoff gemäss einem der vorhergehenden Ansprüche, **dadurch gekennzeichnet, dass** die zweite Komponente (**K2**) eine Mischung eines Trimeren von 1,6-Hexamethylendiisocyanat (HDI) und eines Trimeren von 1-Isocyanato-3,3,5-trimethyl-5-isocyanatomethyl-cyclohexan (=Isophorondiisocyanat oder IPDI) aufweist.

6. Zweikomponentiger wässriger Dispersionsklebstoff gemäss einem der vorhergehenden Ansprüche, **dadurch gekennzeichnet, dass** die Zusammensetzung im Wesentlichen frei von Bestandteilen mit aromatischen Strukturen ist.

7. Zweikomponentiger wässriger Dispersionsklebstoff gemäss einem der vorhergehenden Ansprüche, **dadurch gekennzeichnet, dass** das Gewichtsverhältnis von Ethylenvinylacetat-Copolymer (EVA) zu Polyether-Polyurethanpolymer (**PEPU**) einen Wert von 10 bis 0.8, insbesondere von 9 bis 1.1, bevorzugt 8 bis 1.5, beträgt.

8. Zweikomponentiger wässriger Dispersionsklebstoff gemäss einem der vorhergehenden Ansprüche, **dadurch gekennzeichnet, dass** der Anteil an Wasser 30 - 70 Gew.-%, insbesondere 30 - 60 Gew.-%, bevorzugt 35 - 50 Gew.-%, bezogen auf das Gesamtgewicht des zweikomponentigen wässrigen Dispersionsklebstoffs beträgt.

9. Zweikomponentiger wässriger Dispersionsklebstoff gemäss einem der vorhergehenden Ansprüche, **dadurch gekennzeichnet, dass** der Dispersionsklebstoff im Wesentlichen frei von flüchtigen Anteilen (VOC) ist.

10. Verwendung eines Dispersionsklebstoffes gemäss einem der Ansprüche 1 bis 9 zum Verkleben von Folien, insbesondere im Dachbau.

11. Verfahren zum Verkleben von Folien umfassend die Schritte

(i) Mischen der zwei Komponenten (**K1** und **K2**) eines zweikomponentigen wässrigen Dispersionsklebstoffs gemäss einem der Ansprüche 1 bis 9;
(ii) Auftragen des nach Schritt (i) gemischten wässrigen Dispersionsklebstoffes auf die Oberfläche einer Kunststofffolie (**S1**) und die Oberfläche eines weiteren Substrates (**S2**);
(iii) Ablüften des nach Schritt (ii) aufgetragenen wässrigen Dispersionsklebstoffes,
(iv) Fügen von Kunststofffolie (**S1**) und des weiteren Substrates (**S2**) durch Kontaktieren des auf der Kunststofffolie (**S1**) und auf dem weiteren Substrates (**S2**) befindlichen und nach Schritt (iii) abgelüfteten Dispersionsklebstoffes.

12. Verfahren zum Verkleben gemäss Anspruch 11, **dadurch gekennzeichnet, dass** die Kunststofffolie eine Polyolefinfolie oder eine PVC-Folie ist.

13. Verfahren gemäss Anspruch 12, **dadurch gekennzeichnet, dass** das Verkleben primerlos erfolgt.

14. Verbundkörper (1) aufweisend eine Kunststofffolie (**S1**, 2) und ein weiteres Substrat (**S2**, 3), welche über einen Klebstoff (4), welcher aus einem zweikomponentigen wässrigen Dispersionsklebstoff gemäss einem der Ansprüche 1 bis 9 durch Mischen und anschliessende Aushärtung erhalten wurde, miteinender verbunden sind.

15. Verbundkörper (1) gemäss Anspruch 14, **dadurch gekennzeichnet, dass** der Verbundkörper ein Dach eines Gebäudes ist.

**Fig. 1**

K1

K2

5

6

**Fig. 2**

2

6

3

**Fig. 3**

2

6

3

**Fig. 4**

1

2

4

3

# EP 2 316 865 A1

**EUROPÄISCHER RECHERCHENBERICHT**

Nummer der Anmeldung

EP 09 17 4217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 94/21743 A1 (FULLER H B GMBH [DE]; ARNOLD CHRISTIAN W [DE]; PIMPL WERNER H [DE]) 29. September 1994 (1994-09-29) * Seite 4, Zeilen 20-30 * * Beispiele 1-2 * ----- | 1-15 | INV. C08G18/08 C08G18/10 C09J175/04 C09J175/08 |
| A | EP 0 702 071 A2 (SUNSTAR ENGINEERING INC [JP] SUNSTAR ENGINEERING INC) 20. März 1996 (1996-03-20) * Seite 2, Zeilen 5-10; Beispiele 1-2 * * Anspruch 1 * ----- | 1-15 | |
| A | US 2004/229046 A1 (CHAO TIEN-CHIEH [US] ET AL) 18. November 2004 (2004-11-18) * Absätze [0007] - [0009], [0078] * * Absatz [0099] * * Beispiel 2 * * Ansprüche 1,4 * ----- | 1-15 | |

RECHERCHIERTE SACHGEBIETE (IPC)

C08G
C09J

Der vorliegende Recherchenbericht wurde für alle Patentansprüche erstellt

| Recherchenort | Abschlußdatum der Recherche | Prüfer |
|---|---|---|
| Den Haag | 8. März 2010 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

12

# EP 2 316 865 A1

## ANHANG ZUM EUROPÄISCHEN RECHERCHENBERICHT
## ÜBER DIE EUROPÄISCHE PATENTANMELDUNG NR.

EP 09 17 4217

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2010

| Im Recherchenbericht angeführtes Patentdokument | | Datum der Veröffentlichung | Mitglied(er) der Patentfamilie | | Datum der Veröffentlichung |
|---|---|---|---|---|---|
| WO 9421743 | A1 | 29-09-1994 | DE | 9304018 U1 | 21-07-1994 |
| | | | EP | 0701592 A1 | 20-03-1996 |
| | | | JP | 8507818 T | 20-08-1996 |
| | | | US | 5821297 A | 13-10-1998 |
| EP 0702071 | A2 | 20-03-1996 | AU | 691309 B2 | 14-05-1998 |
| | | | AU | 2833095 A | 28-03-1996 |
| | | | CA | 2155225 A1 | 15-03-1996 |
| | | | DE | 69521091 D1 | 05-07-2001 |
| | | | DE | 69521091 T2 | 13-09-2001 |
| | | | JP | 8081671 A | 26-03-1996 |
| | | | US | 5726242 A | 10-03-1998 |
| US 2004229046 | A1 | 18-11-2004 | CA | 2523707 A1 | 25-11-2004 |
| | | | CN | 1788063 A | 14-06-2006 |
| | | | MX | PA05012127 A | 08-02-2006 |
| | | | WO | 2004101700 A2 | 25-11-2004 |

EPO FORM P0461

Für nähere Einzelheiten zu diesem Anhang : siehe Amtsblatt des Europäischen Patentamts, Nr.12/82